# EUROPÄISCHE PATENTSCHRIFT

(11) **EP 2 147 829 B1**
(45) Veröffentlichungstag und Bekanntmachung des Hinweises auf die Patenterteilung: **21.03.2012**
(21) Anmeldenummer: 09100297.2
(22) Anmeldetag: 27.05.2009
(51) Int. Cl.: B60R 21/0136

(54) **Verfahren zur Korrektur eines Körperschallsignals für eine Unfallerkennung für ein Fahrzeug, Körperschallsensorik und Sensorsteuergerät**
Method for correcting an impact sound signal for accident recognition for a vehicle, impact sound sensor and sensor control device
Procédé de correction d'un signal de bruit corporel pour la reconnaissance d'accident pour un véhicule, technique sensorielle corporelle et appareil de commande de capteur

(30) Priorität: 25.07.2008 DE 102008040723
(43) Veröffentlichungstag der Anmeldung: 27.01.2010
(73) Patentinhaber: ROBERT BOSCH GMBH, 70442 Stuttgart (DE)
(72) Erfinder: Rauh, Christian, 81377, Muenchen (DE); Trinh, Hoang, 70499, Stuttgart (DE); Haid, Markus, 70567, Stuttgart (DE)

(56) Entgegenhaltungen:
- EP-A- 1 914 122
- WO-A-2006/074672
- DE-A1- 10 206 351
- DE-A1- 19 610 833
- DE-A1-102004 031 557
- DE-A1-102006 004 876
- DE-A1-102006 038 151
- DE-A1-102007 055 639

## Beschreibung

### Stand der Technik

Die Erfindung betrifft ein Verfahren zur Korrektur eines Körperschallsignals für eine Unfallerkennung für ein Fahrzeug bzw. eine Körperschallsensorik bzw. ein Sensorsteuergerät nach der Gattung der unabhängigen Patentansprüche.

Aus DE 10 2006 004 876 A1 ist bereits eine Körperschallsensorik bekannt. Es wird vorgeschlagen, Temperatureffekte durch die Verschaltung von Dehnmessstreifen als Körperschallsensorik in einer Messbrücke zu vermeiden. Weiterhin ist es bekannt, die Temperatur getrennt zu erfassen und das Ergebnis der Dehnungsmessung entsprechend zu korrigieren.

Aus der WO 2006 / 074 672 A1 ist bekannt, ein Verfahren zum Ansteuern eines Sicherheitssystems in einem Fahrzeug, wobei ein Ausgangssignal mindestens eines Aufprallsensors in einer Auswerteeinheit, die in einem elektronischen Steuergerät integriert ist, einer Frequenzanalyse unterzogen wird, bei dem die Frequenzanalyse in mindestens einem vorgegebenen Frequenzbereich durchgeführt und das Spektrum des Ausgangssignals mit Referenzmustern verglichen wird. Dabei wird die Abhängigkeit des Spektrums von der aktuellen Fahrzeuggeschwindigkeit und/oder von der aktuellen Fahrzeug-Außentemperatur berücksichtigt und vom Steuergerät ein Ansteuersignal zum Auslösen von vorgesehenen Schutzmaßnahmen ausgegeben, wenn ein Aufprall einer zu schützenden Person zumindest mit einer vorgegebenen Wahrscheinlichkeit erkannt wird.

### Offenbarung der Erfindung

Das erfindungsgemäße Verfahren zur Korrektur eines Körperschallsignals für eine Unfallerkennung für ein Fahrzeug bzw. die erfindungsgemäße Körperschallsensorik bzw. das erfindungsgemäße Sensorsteuergerät mit den Merkmalen der unabhängigen Patentansprüche haben demgegenüber den Vorteil, dass durch die Zuordnung der Temperatur zu einer Temperaturklasse und der Bestimmung des Korrekturwertes für die zugeordnete Temperaturklasse eine Vereinfachung der Temperaturkorrektur erreicht wird, da nicht für jeden einzelnen Wert der gemessen wird eine Korrektur vorgenommen wird, sondern für eine ganze Temperaturklasse, die beispielsweise einen beträchtlichen Temperaturbereich jeweils abdeckt. Damit ist eine effiziente und schnelle Durchführung der Temperaturkorrektur des Körperschallsignals möglich. Dafür können wie aus den abhängigen Ansprüchen hervorgeht, bspw. 4 oder 3 Klassen verwendet werden. Die Korrektur ergibt sich dann entsprechend dieser Klasse und nicht mehr dem individuellen Messwert entsprechend. Dies bedeutet zwar eine Vergröberung aber auch eine Effizienzsteigerung hinsichtlich der benötigten Rechenleistung.

Unter der Korrektur eines Körperschallsignals wird eine Veränderung dieses Körperschallsignals verstanden, um dem wahren Wert näherzukommen, um insbesondere vorliegend den Temperatureffekt am mikromechanischen Sensorelement zu eliminieren.

Das Ermitteln der aktuellen Temperatur bedeutet üblicherweise das Messen mittels einer Temperatursensorik. Dafür sind die in der Halbleitertechnik gebräuchlichen Temperatursensorkonzepte zu verwenden. Insbesondere sind hierfür Halbleitertemperatursensoren geeignet, die einen zu ihrer Temperatur proportionalen Strom liefern oder eine zu ihrer Temperatur proportionale Spannung oder ein temperaturabhängiges digitales Signal.

Es ist weiterhin möglich, dass das Ermitteln der aktuellen Temperatur dahingehend zu verstehen ist, dass die Temperatur durch Vergleichsmessungen ermittelt wird.

Unter dem Bestimmen eines Korrekturwertes für das Körperschallsignal ist das Laden eines solchen Korrekturwertes oder das Berechnen eines solchen Korrekturwertes zu verstehen.

Unter einer Zuordnung der aktuellen Temperatur zu einer Temperaturklasse ist gemeint, dass geprüft wird, in welches Temperaturband der jeweiligen Temperaturklasse die aktuelle Temperatur fällt. Das entsprechende Band bestimmt dann die Temperaturklasse. Für diese Temperaturklasse wird dann der Korrekturwert mit den in Abhängigkeit von der Temperatur bestimmt.

Unter einer Körperschallsensorik kann eine geschlossene oder offene Baugruppe verstanden werden, die ein Körperschallsignal ausgibt. Teile der Körperschallsensorik können auch verteilt in einem elektrischen System vorhanden sein. Unter dem Körperschallsignal wird ein Schallsignal in einem Festkörper verstanden, das beispielsweise in einem Frequenzband zwischen 1 und 20 KHz oder auch bis 50 KHz liegt.

Das mikromechanisch hergestellte kapazitiv messende Sensorelement ist ein Sensorelement, das auch bei mikromechanisch hergestellten Beschleunigungssensoren verwendet wird. Insbesondere wird vorliegend die Oberflächenmikromechanik verwendet.

Bei der Temperatursensorik kann es sich um einen oder mehrere Temperatursensoren handeln.

Das Temperaturkorrekturmodul und auch das Klassifizierungsmodul sind in einer Signalverarbeitung vorgesehen und können getrennte oder gemeinsame Schaltkreise sein oder auch durch einen Prozessor mit entsprechender Software realisiert sein. Insbesondere ist eine integrierte Lösung für das Temperaturkorrekturmodul und das Klassifizierungsmodul möglich.

Das Sensorsteuergerät ist ein elektrisches Gerät, das verschiedene Sensoriken wie die Körperschallsensorik aufweist. Daneben können noch andere Sensoriken wie eine Beschleunigungssensorik oder Drehbewegungssensorik oder andere Sensoren enthalten sein. Insbesondere können beispielsweise eine Beschleunigungssensorik für Fahrdynamikanwendungen und eine weitere Beschleunigungssensorik für Airbaganwendungen vorhanden sein, wobei sich diese Beschleunigungssensoriken in der Empfindlichkeit unterscheiden. Das Sensorsteuergerät gibt die Sensorsignale vorverarbeitet oder als Rohdaten aus. Die Vorverarbeitung kann alle möglichen Schritte wie eine Filterung oder auch schon eine erste Auswertung beziehungsweise Klassifizierung beinhalten. Vorliegend besteht diese Vorverarbeitung in der Korrektur nach der Temperatur. Dabei sind das Temperaturkorrekturmodul und das Klassifizierungsmodul in einem Korrekturbaustein außerhalb der Beschleunigungssensorik vorhanden.

Der Korrekturbaustein ist ein eigener integrierter Schaltkreis, als Prozessor oder Teil eines solchen ICs oder als Softwaremodul auf einem Prozessor ausgebildet. Die abhängigen Ansprüche geben entsprechende Möglichkeiten an.

Die Schnittstelle kann hard- und/oder softwaremäßig ausgebildet sein. Insbesondere kann die Schnittstelle als IC oder Teil eines solchen integrierten Schaltkreises ausgebildet sein. Sie dient zur Ausgabe des korrigierten Körperschallsignals über einen Bus oder eine Punkt-zu-Punkt-Verbindung. Auch eine Funkverbindung kann vorliegend möglich sein.

Durch die in den abhängigen Ansprüchen aufgeführten Maßnahmen und Weiterbildungen sind vorteilhafte Verbesserungen des in den unabhängigen Patentansprüchen angegebenen Verfahrens zur Korrektur eines Körperschallsignals für eine Unfallerkennung für ein Fahrzeug bzw. für die in den unabhängigen Patentansprüchen angegebene Körperschallsensorik möglich.

Es ist vorteilhaft, dass für die zugeordnete Temperaturklasse eine jeweilige Temperaturkennlinie oder ein jeweiliger Korrekturfaktor oder ein jeweiliger Parametersatz zur Bestimmung des Korrekturwertes verwendet wird. Eine solche Temperaturkennlinie kann beispielsweise eine zeitliche Abhängigkeit aufweisen. Dies kann auch durch entsprechende Faktoren realisiert werden. Ein Applikationsparametersatz für jede Temperaturklasse hat insbesondere den Vorteil des kleineren Restfehlers.

Es ist weiterhin vorteilhaft, dass der Korrekturwert in Abhängigkeit von der Frequenz des Körperschallsignals bestimmt wird. Je nach Frequenz des Körperschallsignals kann eine mehr oder weniger große Korrektur für eine bestimmte Temperatur notwendig sein. Dies wird hier vorteilhafterweise berücksichtigt.

Die Temperaturklassenbestimmung kann auch plausibilisiert werden, indem eine Plausibilitätsklasse in Abhängigkeit von einem durch einen Testmodus hervorgerufenen Testkörperschallsignal bestimmt wird. Ein Testmodus ist beispielsweise ein solcher Betriebszustand, der eine definierte Anregung auf das Sensorelement appliziert, sodass als Folge dieser Anregung der Sensor ein Testkörperschallsignal ausgibt. Dieses Testkörperschallsignal kann wie in der Weiterbildung vorgesehen, mit einem Referenzkörperschallsignal verglichen werden, um die Temperaturklasse auf diese Art und Weise zu bestimmen, da die Temperatur einen solchen Einfluss auf das Körperschallsignal hat. Dabei kann dann vorteilhafter Weise die Anregung durch eine elektrostatische Auslenkung einer seismischen Masse der Körperschallsensorik und dabei insbesondere des Sensorelements erfolgen. Mit dieser Plausibilitätstemperaturklasse kann die Temperaturklasse plausibilisiert werden, die in Abhängigkeit von der Ermittlung der aktuellen Temperatur bestimmt wurde.

Es ist weiterhin vorteilhaft, dass genau 4 Temperaturklassen verwendet werden. Als Beispiel wird folgende Einteilung angegeben. Eine Tieftemperaturklasse TT von -40 bis -20 Grad. Eine weitere Klasse von 0 bis 40 Grad, eine dritte Klasse als Hochtemperaturklasse zwischen 60 und 105 Grad und für höhere Temperaturen eine vierte Klasse. Die dazwischen liegenden Temperaturbereiche können diesen Klassen oder weiteren Klassen zugeschlagen werden.

Es ist weiterhin vorteilhaft, dass nach einem Einschalten der Energieversorgung zu der Körperschallsensorik eine Eigenerwärmung der Körperschallsensorik in Abhängigkeit von der Zeit zwischen dem Einschalten und dem unmittelbar vorangegangenen Ausschalten bei der Ermittlung der aktuellen Temperatur berücksichtigt wird. Dies setzt voraus, dass die Eigenwärmeentwicklung des integrierten Schaltkreises der Körperschallsensorik bekannt ist. Damit lässt sich aus der Zeitdauer und der zuletzt gespeicherten Temperatur auf die tatsächliche Temperatur schließen. Dies kommt insbesondere bei einer sogenannten Reinitialisierung wie beispielsweise nach dem Aus- und wieder Einschalten in Frage.

Darüber hinaus es vorteilhaft, dass die Ermittlung der Temperatur in Abhängigkeit von einem zeitlichen Verlauf der Temperatur ausgeführt wird. Hierbei können insbesondere unplausible Temperatursprünge durch beispielsweise eine Gradientenanalyse erkannt und herausgefiltert werden bzw. sie führen bei dem Überschreiten einer vorbestimmten Schwelle in einen Fall-Back-Modus. Denn weist dieser Vergleich unplausible Temperatursprünge auf, kann man von einem defekten Sensorausgang ausgehen und in einem Airbagauslösealgorithmus, der das Körperschallsignal nutzt, müssen entsprechende Maßnahmen getroffen werden. Der Temperaturverlauf kann durch eine Gradientenanalyse auf Sprünge analysiert werden und unplausible Werte können ausmaskiert werden.

Es ist auch von Vorteil, dass das Sensorelement, die Temperatursensorik, das Temperaturkorrekturmodul und das Klassifizierungsmodul auf einem einzigen Halbleitersubstrat integriert sind. Damit liegt die Körperschallsensorik als ein ASIC vor, so dass eine kostengünstigere Realisierung vorliegt.

Es ist möglich, dass der Temperatursensor mit einem weiteren im Airbagsteuergerät vorhandenen Temperatursensor, beispielsweise auf dem sogenannten System-ASIC, abgeglichen wird.

Vorteilhafterweise ist der Korrekturbaustein ein Prozessor mit entsprechender Software. Der Prozessor kann dabei insbesondere ein Mikrocontroller sein.

Alternativ ist es möglich, dass der Korrekturbaustein ein Datenformatumsetzer ist, der neben der Korrektur des Körperschallsignals auch das Datenformat der Sensorsignale von einem internen SPI-Format in ein externes Manchesterprotokoll umsetzt. Ein Beispiel für ein solches Manchesterprotokoll ist der sogenannte PS15-Standard, der unter www.psi5.org abrufbar ist.

In einer Weiterbildung kann der Korrekturbaustein neben der Temperatur auch noch den Offset korrigieren, wobei der Offset als ein Ausgangssignal des Körperschallsensors vorliegt.

Durch die Korrektur im Sensorsteuergerät wird eine Zündbox mit dem Auswertealgorithmus von dieser Tätigkeit vorteilhaftweise entlastet.

Ausführungsbeispiele der Erfindungen sind in der Zeichnung dargestellt und werden in der nachfolgenden Beschreibung näher erläutert.

Es zeigen Figur 1 ein Blockschaltbild eines Steuergeräts mit der erfindungsgemäßen Körperschallsensorik und angeschlossenen Komponenten in einem Fahrzeug, Figur 2 ein Signalflussdiagramm, Figur 3 ein weiteres Signalflussdiagramm, Figur 4 ein weiteres Signalflussdiagramm, Figur 5 ein erstes Flussdiagramm, Figur 6 ein Zweiflussdiagramm, Figur 7 eine Zustandsmaschine für die Temperatursensorüberwachung, Figur 8 ein erstes Ausführungsbeispiel eines Sensorsteuergerät und Figur 9 ein zweites Ausführungsbeispiel eines Sensorsteuergeräts.

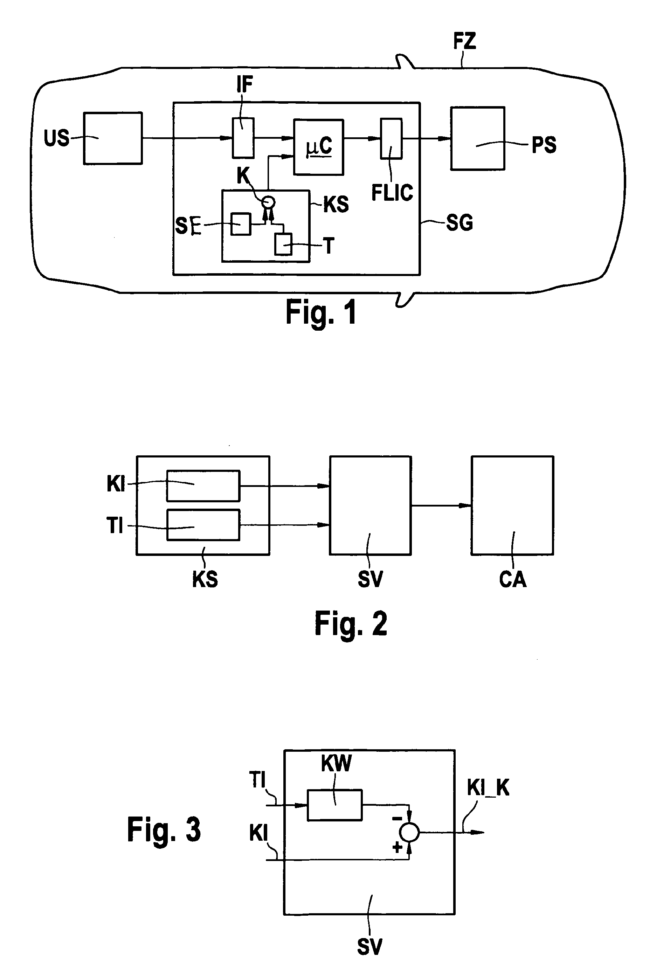

Figur 1 zeigt ein Steuergerät SG zur Ansteuerung von Personenschutzmitteln PS wie Airbags oder Gurtstraffer in einem Fahrzeug FZ. An das Steuergerät SG, das vorliegend ein eigenes Gehäuse aufweist, ist eine Unfallsensorik US, beispielsweise eine Beschleunigungssensorik, Luftdrucksensorik und Umfeldsensorik, angeschlossen. Der Anschluss erfolgt über eine Schnittstelle IF, die vorliegend hardwaremäßig ausgebildet ist. Sie kann Teil eines System-ASICS sein. Die Schnittstelle IF formatiert die Daten der Unfallsensorik US für den Mikrocontroller µC als Auswerteschaltung um.

Die erfindungsgemäße Körperschallsensorik KS ist ebenfalls an den Mikrocontroller µC beispielsweise einen Analogeingang angeschlossen. Alternativ ist es möglich, auch an einen Digitaleingang des Mikrocontrollers µC angeschlossen zu sein. Die Körperschallsensorik KS weist ein Sensorelement SE auf, das mikromechanisch hergestellt wurde. Kapazitiv wird dabei der Körperschall durch eine entsprechende Ankopplung des Steuergeräts SG im Fahrzeug erfasst. Die Körperschallsensorik KS weist weiterhin einen Temperatursensor T auf, dessen Ausgangssignal in eine Korrektureinheit K eingeht. Hierin geht auch das Ausgangssignal des Sensorelements ein, so dass die Korrektureinheit des Körperschallsignals in Abhängigkeit von Temperatursignal korrigieren kann. Dieses temperaturkorrigierte Körperschallsignal geht in den Mikrocontroller µC ein um dann vom Auswertealgorithmus im Mikrocontroller µC ausgewertet zu werden, ob letztlich die Personenschutzmittel PS anzusteuern sind oder nicht. Ist das der Fall, dann gibt der Mikrocontroller µC ein Ansteuersignal an die Ansteuerschaltung FLIC aus, die ebenfalls Teil des System-ASICS sein kann. Die Ansteuerschaltung FLIC weist eine Verarbeitungslogik auf, um das Ansteuersignal zu verarbeiten und in Abhängigkeit davon eine Ansteuerung der Personenschutzmittel PS zu bewirken beispielsweise durch das Schließen von elektrisch steuerbaren Leistungsschaltern die dann eine Bestromung von Zündelementen bspw. von Airbags oder pyrotechnisch ansteuerbaren Gurtstraffern ermöglichen.

Erfindungswesentlich ist, dass die Korrektur des Körperschallsignals in Abhängigkeit von Temperaturklassen erfolgt. Dabei wird die aktuell gemessene Temperatur auf eine Temperaturklasse abgebildet sodass beispielsweise beim Vorliegen von 4 Temperaturklassen nur 4 Korrekturwerte oder Kennlinien vorliegen müssen, was die Effizienz dieser Temperaturkorrektur entscheidend erhöht.

Figur 2 erläutert dies noch einmal in einem Signalflussdiagramm. In der Körperschalisensorik KS wird die Körperschallinformation KI und die Temperaturinformation TI erzeugt. Diese Informationen gehen in die Signalverarbeitung SV ein, die die Korrektur der Körperschallinformation in Abhängigkeit von der Temperaturinformation durchführt. Die Signalverarbeitung SV kann Teil der Körperschallsensorik KS sein, ein eigener Teil oder auch beispielsweise Teil eines Mikrocontrollers µC als eine entsprechendes Softwareelement. Das temperaturkorrigierte Signal wird dann dem Auslösealgorithmus CA übertragen. Dieser Algorithmus bestimmt in Abhängigkeit vom Körperschallsignal und gegebenenfalls weiteren Sensorsignalen von der Unfallsensorik US, ob die Personenschutzmittel anzusteuern sind, wann und wie stark.

Figur 3 illustriert in einem weiteren Signalflussdiagramm wie die Temperaturkorrektur der Körperschallinformation KI durchgeführt werden kann. Die Temperaturinformation geht auf einen Block KW zur Bestimmung des Korrekturwertes. Dabei wird nun der Temperaturinformation TI eine Temperaturklasse zugeordnet in Abhängigkeit derer dann der Korrekturwert bestimmt wird. Dieser Korrekturwert kann in Form einer entsprechenden Kennlinie, eines Korrekturfaktors oder anderer geeigneter Werte bestimmt werden. Der Korrekturwert wird dann vom Körperschallsignal KI abgezogen, sodass am Ausgang das korrigierte Körperschallsignal KI_K vorliegt.

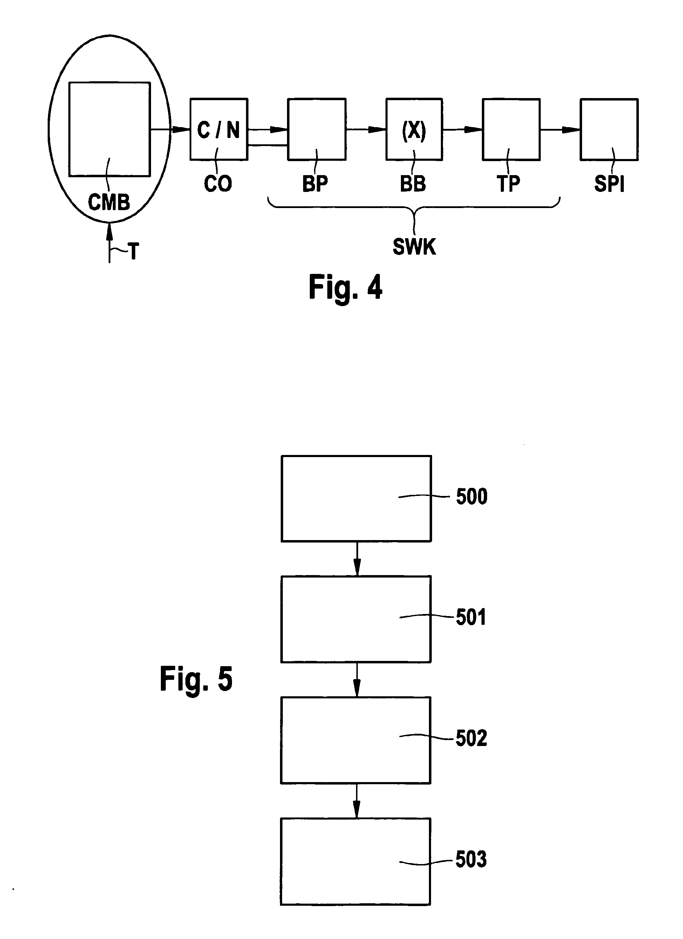

Figur 4 zeigt eine Signalwirkungskette der Körperschallsensorik. Auf das Sensorelement CMB wirkt die Temperatur als störender Parameter, sodass diese Störung erfindungsgemäß kompensiert wird. Das Ausgangssignal des Sensorelements CMB wird von einem Kapazitätsspannungswandler CO gewandelt. Dieses Signal geht dann in einen Bandpass ein BP, der das Körperschallsignal herausfiltert, schließlich in einen Betragsbilder BB und in einen Tiefpass TP. Letztlich wird das Signal über eine SPI (Serial Peripherial Interface) Schnittstelle an den Mikrocontroller µC übertragen. Die Verarbeitung der Signalwirkungskette SWK kann analog oder digital vorgenommen werden. Die Einwirkung der Temperaturkompensation kann an verschiedenen Stellen der Signalwirkungskette erfolgen. Vorliegend sind die Komponenten CO, BP, BB, TP und SPI on chip. D. h. alle sind auf einem einzigen Halbleitersubstrat angeordnet. Auch das Sensorelement CMB kann auf diesem Substrat angeordnet sein.

Figur 5 zeigt in einem Flussdiagramm den Ablauf des erfindungsgemäßen Verfahrens. In Verfahrensschritt 500 wird die Temperatur wie oben dargestellt ermittelt, durch die Auswertung des Temperaturmesssignals. Im Verfahrensschritt 501 erfolgt die Zuordnung dieser Temperatur zu einer Temperaturklasse. In Verfahrensschritt 502 wird eine Korrekturkennlinie, ein Korrekturfaktor oder ein anderer Wert zur Bestimmung des Korrekturwerts geladen. Diese Ladung erfolgt in Abhängigkeit von der Temperaturklasse. Im Verfahrensschritt 503 erfolgt die Korrektur des Körperschallsignals die gegebenenfalls auch frequenzabhängig durchgeführt werden kann.

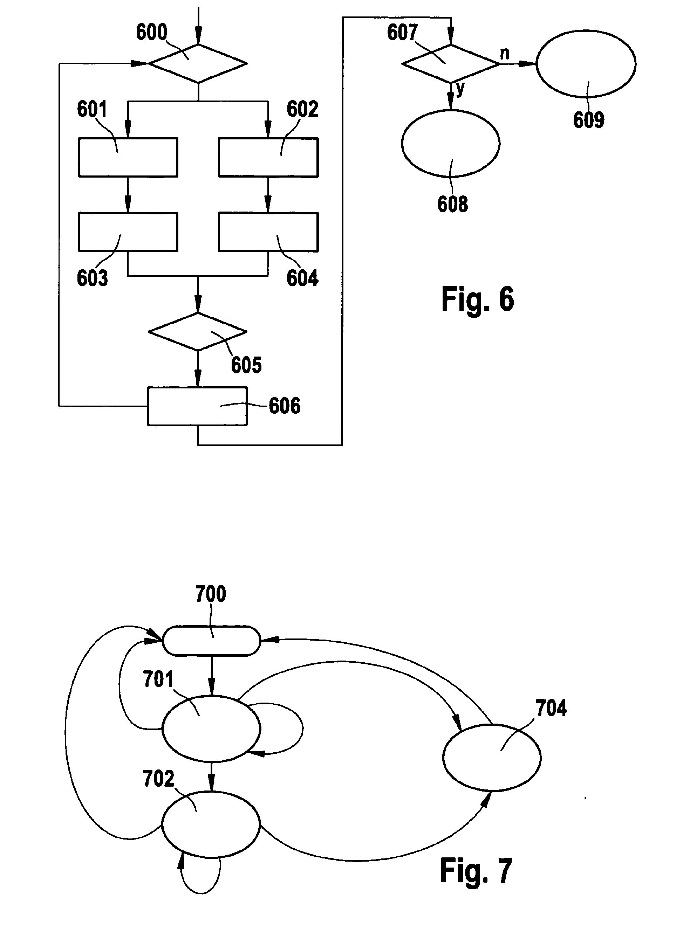

In Figur 6 ist ein weiteres Flussdiagramm des erfindungsgemäßen Verfahrens dargestellt, das einen internen Selbsttest beschreibt. In Verfahrensschritt 600 wird ein Zähler initialisiert und ansonsten der inkrementierte Wert aus der Schleife geholt. In Verfahrensschritt 601 wird der entsprechende Wert vom Temperatursensor geholt. In Verfahrensschritt 603 wird eine Klassifizierung des Temperaturwerts durchgeführt, so dass dann die entsprechende Temperaturklasse vorliegt. In Verfahrensschritt 602 wird der i-te Sensortest durchgeführt und in Verfahrensschritt 604 wird eine Plausibilisierung der Temperaturklasse durchgeführt. In Verfahrensschritt 605 wird geprüft, ob die entsprechende Temperaturklasse aus Verfahrensschritt 603 mit der plausibilisierten Temperaturklasse übereinstimmt. In Verfahrensschritt 606 wird zu Verfahrensschritt 600 zurückgesprungen mit einem Inkrementieren des Zählers, wenn eine Schwelle M noch nicht erreicht ist. In Verfahrensschritt 607, der nach Erreichen der Schwelle M erreicht wird, wird geprüft, wie oft die Übereinstimmung in Verfahrensschritt 605 stattgefunden hat. Dies entspricht einem Voter. In Abhängigkeit davon wird eine Rückfallebene 609 oder der normale Betriebsmodus 608 gewählt.

Figur 7 zeigt eine Zustandsmaschine der Temperatursensorüberwachung. Im Zustand 700 wird die Körperschallsensorik mit Energie versorgt. Es findet der sogenannte power-on statt. Sodann wird in den Zustand 701 übergegangen, der die Initialisierung der Körperschallsensorik darstellt. Dabei wird zunächst ein interner Selbsttest (BITE n-mal) durchlaufen. Dieser Selbsttest weist folgende Schritte auf: Es erfolgt eine elektrostatische Auslenkung der seismischen Masse des Körperschallsensors sodass die Körperschallsensorik die aktuelle Temperatur eindeutig zu einer Temperaturklasse beispielsweise einer Hochtemperatur oder Tieftemperaturklasse zuordnen kann. Dies wird dadurch durchgeführt, dass ein gespeicherter Referenzwert bei Raumtemperatur mit Messwert bei der aktuellen Temperatur durchgeführt wird. Stimmt diese Temperaturklasse mit der Temperaturklasse überein, die in Folge der Temperaturmessung mit dem Temperatursensor bestimmt wurde, liegt die Plausibilisierung vor. Bei der Zuordnung der gemessenen Temperatur zu einer Temperaturklasse ist eine Überprüfung der aktuellen Messwerte mit der gültigen Temperatur im Messbereich vorgesehen. Ungültige Werte werden nicht für die Auswertung herangezogen. Dieser Selbsttest wird n-mal durchlaufen. Dabei werden mehrere gültige Vergleiche vorgenommen aus der mit Hilfe beispielsweise eines Voters eine Mehrheitsentscheidung durchgeführt wird.

Ist der Selbsttest in Ordnung, wird in den Zustand 702 weitergesprungen. Hier handelt es sich um den Betriebsmodus. Wird die Energie zuvor abgeschaltet, wird in den Zustand 700 zurückgesprungen. Ist der Selbsttest BITE nicht in Ordnung, dann wird in den Rückfallmodus 704 gesprungen. Dies bedeutet, dass der Temperatursensor nicht ausgewertet wird und die Temperaturklasse beispielsweise gleich der Raumtemperatur gewählt wird. Auch von diesem Zustand 704 kann durch Ausschalten der Energiezufuhr in den Zustand 700 zurückgesprungen werden.

Im Betriebsmodus 702 erfolgt ein Vergleich des aktuellen Temperaturwerts mit alten Referenztemperaturwert, der in einem bestimmten Intervall gespeichert wird. Ein aktueller Temperaturwert wird dabei gefiltert, beispielsweise durch ein gleitenden Mittelwert und einer Temperaturklasse zugeordnet. Unplausible Temperatursprünge werden durch Gradientenanalyse erkannt und herausgefiltert bzw. führen zur Überschreitung einer Schwelle und dann zum Springen in den Rückfallmodus 704.

Auch aus dem Zustand 704 wird durch Abschalten der Energiezufuhr ein Rücksprung in den Zustand 700 vorgenommen.

In einer weiteren Initialisierung (Hochlaufen des Steuergeräts) wird der Sensor mit dem meist auf dem System-ASIC des Steuergeräts existierenden Temperatursensors abgeglichen. Bei einer Reinitialisierung wie beispielsweise nach dem Aus- und wieder Einschalten ist ein Abkühlen des Temperatursensors sowie die Umgebungstemperatur und die Zeitdauer zwischen Aus und Einschalten zu berücksichtigen. Da die Eigenwärmeentwicklung des System-ASICS bekannt ist, lässt sich aus der Zeitdauer und der zuletzt gespeicherten Temperatur auf die tatsächliche Temperatur schließen.

Während des weiteren Betriebs wird dann das Ausgangssignal kontinuierlich überwacht, in dem nach einer parametrisierbaren Zeit die alte Temperatur (abgelegter Wert) in einem Speicher bspw. einem EEPROM mit der neuen Temperatur (Ausgangssensor) verglichen wird. Weist dieser Vergleich unplausible Temperatursprünge auf, kann man von einem Defekt des Sensorausgangs ausgehen und im Auslösealgorithmus entsprechende Maßnahmen treffen. Des Weiteren kann der Temperaturverlauf durch eine Gradientenanalyse Sprünge entdecken und unplausible Werte ausmaskieren.

Weiterhin ist es möglich, andere Temperatursensoren, wie z. B. Raumtemperatur- oder Fahrzeuginnentemperatur- oder ESP-Temperatursensoren, die über den Fahrzeug-CAN verfügbar sind, zur Plausibilisierung heranzuziehen.

Zur Schonung der Busauslastung kann der Temperaturvergleich nach der Initialisierungsphase mit erheblich geringeren Abtastzeiten durchgeführt werden.

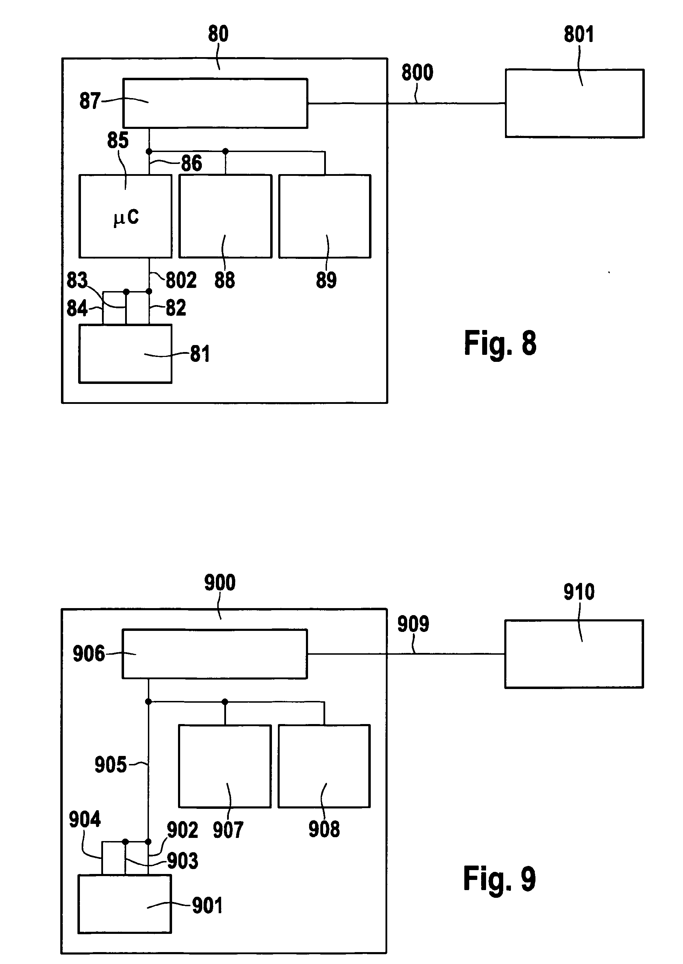

Figur 8 zeigt ein erstes Ausführungsbeispiel eines Sensorsteuergeräts 80. Ein Körperschallsensor 81 im Sensorsteuergerät 80 weist drei Ausgänge 82-84 auf, wobei der Ausgang 82 das Körperschallsignal, der Ausgang 83 das Temperatursignal und der Ausgang 84 das Offsetsignal ausgibt. Diese Ausgänge 82-84 gehen auf einen SPI (Serial Peripherial Interface) Bus 802 und führen zu einem Mikrocontroller 85, der in der oben angegebenen Weise die Temperaturkorrektur durchführt. Vorliegend führt der Mikrocontroller 85 ebenfalls die Offsetkorrektur durch. Der Mikrocontroller 85 weist für diese Korrekturen die entsprechenden Softwaremodule auf.

Das so korrigierte Körperschallsignal wird über die SPI-Leitung 86 zu einem Datenformatumsetzer 87 übertragen, der vorliegend das SPI-Format in ein PSI5-Format umsetzt, mit das Körperschallsignal zu einer Zündbox 801 und eine PSI5-Leitung 800 übertragen wird. Der Datenformatumsetzer 87 wirkt vorliegend auch als Schnittstelle und ist als ASIC ausgebildet.

Weitere Sensoren 88 und 89 können über die SPI-Leitung 86 an den Datenformatumsetzer 87 angeschlossen sein.

Der Mikrocontroller 85 kann noch weitere Vorverarbeitungsschritte am Körperschallsignal wie bspw. eine Integration vornehmen. Auch andere Sensorsignale können vom Mikrocontroller 85 vorverarbeitet werden.

Die Zündbox 801 führt einen Auswertealgorithmus anhand des Körperschallsignals und weiterer Sensorsignale aus, um zu entscheiden, ob, welche und wie stark entsprechende Personenschutzmittel anzusteuern sind. Die Ansteuerung wird dann entsprechend ausgeführt.

Vorliegend werden nur die für das Verständnis der Erfindung notwendigen Komponenten dargestellt. Weitere für den Betrieb des Sensorsteuergeräts notwendigen Komponenten sind der Einfachheit halber weggelassen worden.

Fig. 9 zeigt ein weiteres Ausführungsbeispiel des Sensorsteuergeräts 900. Der Körperschallsensor mit seinen drei Ausgängen 902-904 ist über den SPI-Bus 905 an den Datenformatumsetzer 906 angeschlossen, wobei nunmehr der Datenformatumsetzer 906 die Korrekturfunktion für das Körperschallsignal bezüglich der Temperatur und ggf. des Offsets aufweist. Der Ausgang 902 liefert dabei das Körperschallsignal, der Ausgang 903 das Temperatursignal und der Ausgang 904 das Offsetsignal.

Weitere Sensoren 907 und 908 können an den Datenformatumsetzer 906 angeschlossen sein, der wiederum als Schnittstelle an die PSI5-Leitung 909 angeschlossen ist, wobei die PSI5-Leitung 909 zur Zündbox 910 führt.

## Patentansprüche

1. Verfahren zur Korrektur eines Körperschallsignals für eine Unfallerkennung für ein Fahrzeug (FZ) mit folgenden Verfahrensschritten:
- Ermitteln der aktuellen Temperatur;
- Zuordnen der ermittelten Temperatur zu einer Temperaturklasse;
- Bestimmen eines Korrekturwerts für die zugeordnete Temperaturklasse;
- Korrigieren des Körperschallsignals mittels des Korrekturwerts.

2. Verfahren nach Anspruch 1, **dadurch gekennzeichnet, dass** für die zugeordnete Temperaturklasse eine jeweilige Korrekturkennlinie oder ein jeweiliger Korrekturfaktor oder ein jeweiliger Parametersatz zur Bestimmung des Korrekturwerts verwendet wird.

3. Verfahren nach einem der vorherigen Ansprüche, **dadurch gekennzeichnet, dass** der Korrekturwert zusätzlich in Abhängigkeit von der Frequenz des Körperschallsignals bestimmt wird.

4. Verfahren nach einem der Ansprüche 1 bis 3, **dadurch gekennzeichnet, dass** die zugeordnete Temperaturklasse **dadurch** plausibilisiert wird, dass eine Plausibilitätstemperaturklasse in Abhängigkeit von einem durch einen Testmodus hervorgerufenen Testkörperschallsignal bestimmt wird.

5. Verfahren nach Anspruch 4, **dadurch gekennzeichnet, dass** im Testmodus das Testkörperschallsignal durch eine elektrostatische Auslenkung einer seismischen Masse einer Körperschallsensorik erzeugt wird, und dass die Plausibilitätstemperaturklasse in Abhängigkeit von einem Vergleich des Testkörperschallsignals und eines Referenzkörperschallsignals bestimmt wird.

6. Verfahren nach einem der Ansprüche 1 bis 5, **dadurch gekennzeichnet, dass** vier Temperaturklassen verwendet werden.

7. Verfahren nach einem der Ansprüche 1 bis 6, **dadurch gekennzeichnet, dass** nach einem Einschalten einer Energieversorgung zu der Körperschallsensorik eine Eigenerwärmung eines Substrats für die Temperatursensorik in Abhängigkeit von einer Zeitdauer zwischen dem Einschalten und dem unmittelbar vorangegangenen Ausschalten bei der Ermittlung der aktuellen Temperatur berücksichtigt wird.

8. Verfahren nach einem der vorhergehenden Ansprüche, **dadurch gekennzeichnet, dass** die Ermittlung der Temperatur in Abhängigkeit von einem zeitlichen Verlauf der Temperatur ausgeführt wird.

9. Körperschallsensorik (KS) mit:
- einem mikromechanisch hergestellten, kapazitiv messenden Sensorelement (SE) zur Ausgabe eines Körperschallsignals;
- einer Temperatursensorik (T) zur Ausgabe eines Temperatursignals;
- einem Klassifizierungsmodul zur Zuordnung des Temperatursignals zu einer Temperaturklasse;
- einem Temperaturkorrekturmodul (K) zur Korrektur des Körperschallsignals mit einem Korrekturwert, wobei das Temperaturkorrekturmodul den Korrekturwert für die zugeordnete Temperaturklasse bestimmt.

10. Körperschallsensorik nach Anspruch 9, **dadurch gekennzeichnet, dass** das Sensorelement die Temperatursensorik, das Temperaturkorrekturmodul und das Klassifizierungsmodul auf einem Halbleitersubstrat integriert sind.

11. Sensorsteuergerät (80, 900) mit:
- einer Körperschallsensorik (81, 901) mit einer Temperatursensorik zur Ausgabe eines Körperschall- und eines Temperatursignals;
- einem Korrekturbaustein (85, 906) zur Zuordnung des aktuellen Temperatursignals zu einer Temperaturklasse, zur Bestimmung eines Korrekturwerts für die zugeordnete Temperaturklasse und zur Korrektur des Körperschallsignals mit dem Korrektarwert;
- einer Schnittstelle (87, 906) zur Ausgabe des korrigierten Körperschallsignals.

12. Sensorsteuergerät nach Anspruch 11, **dadurch gekennzeichnet, dass** der Korrekturbaustein (85) ein Prozessor ist.

13. Sensorsteuergerät nach Anspruch 11, **dadurch gekennzeichnet, dass** der Korrrekturbaustein ein Datenformatumsetzer ist.

14. Sensorsteuergerät nach einem der Ansprüche 11-13, **dadurch gekennzeichnet, dass** der Korrekturbaustein (85, 906) zur Offsetkorrektur des Körperschallsignals vorgesehen ist.

## Claims

1. Method for correcting a solid-borne sound signal for accident detection for a vehicle (FZ) having the following method steps:
- determination of the current temperature;
- assignment of the determined temperature to a temperature class;
- determination of a correction value for the assigned temperature class;
- correction of the solid-borne sound signal by means of the correction value.

2. Method according to Claim 1, **characterized in that** a respective correction characteristic curve or a respective correction factor or a respective parameter set for the determination of the correction value is used for the assigned temperature class.

3. Method according to one of the preceding claims, **characterized in that** the correction value is additionally determined as a function of the frequency of the solid-borne sound signal.

4. Method according to one of Claims 1 to 3, **characterized in that** the plausibility of the assigned temperature class is checked **in that** a plausibility temperature class is determined as a function of a test solid-borne sound signal caused by a test mode.

5. Method according to Claim 4, **characterized in that** in the test mode the test solid-borne sound signal is generated by electrostatic deflection of a seismic mass of a solid-borne sound sensor system, and **in that** the plausibility temperature class is determined as a function of a comparison of the test solid-borne sound signal and of a reference solid-borne sound signal.

6. Method according to one of Claims 1 to 5, **characterized in that** four temperature classes are used.

7. Method according to one of Claims 1 to 6, **characterized in that** after a power supply for the solid-borne sound sensor system has been switched on, self-heating of a substrate for the temperature sensor system is taken into account as a function of a time period between switching on and the directly preceding switching off during the determination of the current temperature.

8. Method according to one of the preceding claims, **characterized in that** the temperature is determined as a function of a chronological profile of the temperature.

9. Solid-borne sound sensor system (KS) having:
- a micromechanically manufactured, capacitively measuring sensor element (SE) for outputting a solid-borne sound signal;
- a temperature sensor system (T) for outputting a temperature signal;
- a classification module for assigning the temperature signal to a temperature class;
- a temperature correction module (K) for correcting the solid-borne sound signal with a correction value, wherein the temperature correction module (K) determines the correction value for the assigned temperature class.

10. Solid-borne sound sensor system according to Claim 9, **characterized in that** the sensor element, the temperature sensor system, the temperature correction module (K) and the classification module are integrated on a semiconductor substrate.

11. Sensor control unit (80, 900) having:
- a solid-borne sound sensor system (81, 901) having a temperature sensor system for outputting a solid-borne sound signal and a temperature signal;
- a correction module (85, 906) for assigning the current temperature signal to a temperature class in order to determine a correction value for the assigned temperature class and to correct the solid-borne sound signal with the correction value;
- an interface (87, 906) for outputting the corrected solid-borne sound signal.

12. Sensor control unit according to Claim 11, **characterized in that** the correction module (85) is a processor.

13. Sensor control unit according to Claim 11, **characterized in that** the correction module is a data format converter.

14. Sensor control unit according to one of Claims 11-13, **characterized in that** the correction module (85, 906) is provided for performing offset correction of the solid-borne sound signal.

## Revendications

1. Procédé de correction d'un signal de bruit de structure pour la détection d'un accident pour un véhicule (FZ) comprenant les étapes suivantes :
- détermination de la température actuelle ;
- affectation d'une classe de température à la température déterminée ;
- détermination d'une valeur de correction pour la classe de température affectée ;
- correction du signal de bruit de structure au moyen de la valeur de correction.

2. Procédé selon la revendication 1, **caractérisé en ce qu'**une courbe caractéristique de correction ou un facteur de correction correspondant ou encore un jeu de paramètres correspondant est utilisé(e) pour la classe de température affectée afin de déterminer la valeur de correction.

3. Procédé selon l'une des revendications précédentes, **caractérisé en ce que** la valeur de correction est en plus déterminée en fonction de la fréquence du signal de bruit de structure.

4. Procédé selon l'une des revendications 1 à 3, **caractérisé en ce que** la plausibilité de la classe de température affectée est vérifiée **en ce qu'**une classe de température de plausibilité est déterminée en fonction d'un signal de bruit de structure de test provoqué par un mode de test.

5. Procédé selon la revendication 4, **caractérisé en ce que** dans le mode de test, le signal de bruit de structure de test est généré par une déviation électrostatique d'une masse sismique d'un dispositif de détection de bruit de structure et **en ce que** la classe de température de plausibilité est déterminée en fonction d'une comparaison du signal de bruit de structure de test et d'un signal de bruit de structure de référence.

6. Procédé selon l'une des revendications 1 à 5, **caractérisé en ce que** quatre classes de température sont utilisées.

7. Procédé selon l'une des revendications 1 à 6, **caractérisé en ce qu'**après une mise en circuit d'une source d'alimentation en énergie vers le dispositif de détection de bruit de structure, un réchauffement propre d'un substrat pour le dispositif de détection de la température en fonction d'une durée entre la mise en circuit et la mise hors circuit immédiatement précédente est pris en compte lors de la détermination de la température actuelle.

8. Procédé selon l'une des revendications précédentes, **caractérisé en ce que** la détermination de la température est réalisée en fonction d'une évolution dans le temps de la température.

9. Dispositif de détection de bruit de structure (KS) comprenant :
- un élément de détection (SE) de fabrication micromécanique et à mesure capacitive pour délivrer un signal de bruit de structure ;
- un dispositif de détection de la température (LT) pour délivrer un signal de température ;
- un module de classification pour affecter le signal de température à une classe de température ;
- un module de correction de température (K) pour corriger le signal de bruit de structure avec une valeur de correction, le module de correction de température (K) déterminant la valeur de correction pour la classe de température affectée.

10. Dispositif de détection de bruit de structure selon la revendication 9, **caractérisé en ce que** l'élément de détection, le dispositif de détection de la température, le module de correction de température et le module de classification sont intégrés sur un substrat en semiconducteur.

11. Contrôleur de capteur (80, 900), comprenant :
- un dispositif de détection de bruit de structure (81, 901) muni d'un dispositif de détection de température pour délivrer un signal de bruit de structure et un signal de température ;
- un composant de correction (85, 906) pour affecter le signal de température actuel à une classe de température en vue de déterminer une valeur de correction pour la classe de température affectée et pour corriger le signal de bruit de structure avec la valeur de correction ;
- une interface (87, 906) pour délivrer le signal de bruit de structure corrigé.

12. Contrôleur de capteur selon la revendication 11, **caractérisé en ce que** le composant de correction (85) est un processeur.

13. Contrôleur de capteur selon la revendication 11, **caractérisé en ce que** le composant de correction est un convertisseur de format de données.

14. Contrôleur de capteur selon l'une des revendications 11 à 13, **caractérisé en ce que** le composant de correction (85, 906) est prévu pour corriger l'offset du signal de bruit de structure.
